(19) Europäisches Patentamt / European Patent Office / Office européen des brevets

(11) **EP 1 697 770 B1**

(12) **FASCICULE DE BREVET EUROPEEN**

(45) Date de publication et mention de la délivrance du brevet:
**28.01.2009 Bulletin 2009/05**

(51) Int Cl.:
***G02B 1/11*** *(2006.01)*    ***G02C 7/10*** *(2006.01)*

(21) Numéro de dépôt: **04816569.0**

(22) Date de dépôt: **16.12.2004**

(86) Numéro de dépôt international:
**PCT/FR2004/050716**

(87) Numéro de publication internationale:
**WO 2005/059603 (30.06.2005 Gazette 2005/26)**

(54) **ARTICLE D OPTIQUE REVETU D UN REVETEMENT ANTI-REFLETS M ULTICOUCHES ABSORBANT DANS LE VISIBLE ET PROCEDE DE FABRICATION**

MIT SICHTBAR ABSORBIERENDER MEHRSCHICHTIGER ANTIREFLEXBESCHICHTUNG BEDECKTER OPTISCHER ARTIKEL UND HERSTELLUNGSVERFAHREN DAFÜR

OPTICAL ARTICLE COVERED WITH A VISIBLE-ABSORBING, MULTI-LAYER ANTI-REFLECTIVE COATING, AND PRODUCTION METHOD THEREOF

(84) Etats contractants désignés:
**AT BE BG CH CY CZ DE DK EE ES FI FR GB GR HU IE IS IT LI LT LU MC NL PL PT RO SE SI SK TR**

(30) Priorité: **17.12.2003 FR 0351097**
**07.01.2004 FR 0450042**

(43) Date de publication de la demande:
**06.09.2006 Bulletin 2006/36**

(73) Titulaire: **ESSILOR INTERNATIONAL COMPAGNIE GENERALE D'OPTIQUE**
**94227 Charenton cédex (FR)**

(72) Inventeurs:
• **THOMAS, Michèle**
**F-94310 Orly (FR)**
• **ARNAL, Alain**
**F-55000 Villes-sur-Saulx (FR)**
• **HELMSTETTER, Yvon**
**F-55000 Boviolles (FR)**

(74) Mandataire: **Catherine, Alain et al**
**Cabinet Harlé & Phélip**
**7 rue de Madrid**
**75008 Paris (FR)**

(56) Documents cités:
**EP-B- 0 834 092          WO-A-03/034106**
**US-A- 3 962 488          US-A- 5 694 240**
**US-A- 5 728 456**

• **DATABASE WPI Section Ch, Week 200336 Derwent Publications Ltd., London, GB; Class L03, AN 2003-378728 XP002284018 -& RU 2 200 337 C (GALYAUTDINOV R T) 10 mars 2003 (2003-03-10)**
• **PATENT ABSTRACTS OF JAPAN vol. 2000, no. 09, 13 octobre 2000 (2000-10-13) -& JP 2000 171605 A (SONY CORP), 23 juin 2000 (2000-06-23)**

Remarques:
Le dossier contient des informations techniques présentées postérieurement au dépôt de la demande et ne figurant pas dans le présent fascicule.

EP 1 697 770 B1

**Description**

La présente invention concerne, de manière générale, un article d'optique coloré, en particulier un verre ophtalmique coloré, tel qu'un verre solaire ainsi qu'un procédé de fabrication d'un tel article.

La technique de coloration la plus usuelle des verres organiques, dans le domaine ophtalmique, consiste à tremper ces verres (substrats) organiques dans un bain de coloration aqueux comprenant des pigments solubilisés et/ou dispersés, ce bain étant généralement maintenu proche de l'ébullition (typiquement 90 à 95°C). Les pigments diffusent alors sous la surface des substrats.

Certains substrats, comme les polycarbonates (PC), sont très difficilement colorables par cette voie. Il est alors nécessaire d'ajouter au bain de coloration des solvants, souvent agressifs vis-à-vis des substrats. En outre, l'utilisation de ces solvants pose un problème tant sur le plan industriel que de l'environnement.

Une autre technique connue consiste à incorporer un agent colorant dans un revêtement déposé sur le substrat.

Ainsi, le brevet US 4,802,744 décrit un verre de lunette photochromique dont les deux faces optiques sont chacune revêtues d'une couche de monoxyde de titane, la couche de monoxyde de titane déposée sur la face arrière étant revêtue d'une couche anti-reflets à base de $MgF_2$.

Toutefois, dans le brevet US 4,802,755, les couches à base de monoxyde de titane ne font pas partie d'un empilement ayant des propriétés anti-réfléchissantes.

Le brevet américain 5,694,240 décrit un verre de lunette solaire comportant, sur sa face arrière concave arrière un revêtement multicouches. Le revêtement multicouches comporte une couche d'oxyde de titane sous stoechiométrique TiOx ($0,2 \leq x \leq 1,5$) absorbant dans le visible, adjacente au substrat, diminuant la transmission de la lumière visible d'au moins 10 %. Le revêtement multicouches comporte en outre une couche composite réduisant la transmission des UV et constituée d'au moins deux couches alternées (typiquement $TiO_2$ et $SiO_2$) et éventuellement d'une couche anti-reflets bas indice de réfraction en oxyde ou fluorure métallique.

La demande internationale WO 97/27997 décrit notamment un revêtement anti-reflets bi-couche absorbant dans le visible, et comprenant une couche fine extérieure d'un matériau de bas indice de réfraction, disposée sur une très fine couche absorbante d'un oxynitrure d'un métal de transition sous-stoechiométrique TiOxNy, avec x variant de 0,3 à 0,8 et y variant de 0,8 à 1,2. Le dépôt de ce revêtement est effectué par pulvérisation cathodique sur des substrats en verre minéral.

Le brevet américain 3,962,488 décrit un article d'optique comportant un revêtement multicouches. Le revêtement multicouches comport un couche d'oxyde de titane sous stoechiometrique, une couche d'argent ou d'or et une troisieme couche d'oxyde de titane sous stoechiometrique.

Enfin, le brevet européen EP 0834092 B1 décrit notamment un article d'optique à coefficient de transmission élevé comprenant un substrat transparent sur lequel est formé un revêtement transparent anti-reflets multicouches électriquement conducteur. Ce revêtement anti-reflets est constitué de couches alternées de haut indice de réfraction et de bas indice de réfraction, comprenant des oxydes de titane et des oxydes de silicium.

Toutefois, l'article d'optique de EP 0834092 B1 possède une transmittance à une longueur d'onde de 550 nm variant de 98 à 99,5% environ, et ne peut donc être considéré comme étant coloré.

L'invention a donc pour objet de fournir un article d'optique, notamment un verre ophtalmique, coloré remédiant aux inconvénients de l'art antérieur ainsi qu'un procédé de fabrication d'un tel article.

L'invention a encore pour objet de fournir un article tel que défini ci-dessus comportant sur au moins une de ses faces principales, de préférence sa face concave arrière, un revêtement anti-reflets absorbant dans le visible, présentant une coloration homogène, stable dans le temps et résistant aux UV.

L'invention a également pour objet de fournir un procédé de dépôt d'un revêtement anti-reflets tel que défini ci-dessus par évaporation sous vide, sans chauffage du substrat.

Ces objets sont obtenus selon l'invention par un article d'optique selon la revendication 1.

Par couche absorbant dans le visible, on entend au sens de la présente demande, une couche d'un revêtement anti-reflets, qui a pour fonction de réduire le facteur de transmission de la lumière visible, c'est-à-dire dans la gamme de longueur d'onde allant de 380 à 780 nm.

Comme cela est bien connu dans la technique, le revêtement anti-reflets multicouches est formé d'un empilement d'au moins deux couches ayant alternativement un bas indice de réfraction (couche BI, $n_D^{25} < 1,5$) et un indice de réfraction élevé (couche HI, $n_D^{25} \geq 1,5$, préférentiellement $\geq 1,6$).

Typiquement, les revêtements anti-reflets comportent quatre ou plus couches alternées BI et HI.

Comme cela est également bien connu, ces couches sont généralement des couches d'oxydes, de nitrures, de fluorures minéraux ou des mélanges de ceux-ci, tels que SiO, $SiO_2$, $Al_2O_3$, $TiO_2$, $ZrO_2$, $Ta_2O_5$, $Si_3N_4$ ou $MgF_2$. De préférence, on utilise les oxydes minéraux.

Selon l'invention, l'empilement anti-reflets comporte au moins deux couches absorbant dans le visible, de sorte que le facteur relatif de transmission (Tv) dans le visible de l'article d'optique revêtu du revêtement anti-reflets soit diminué d'au moins 10%, de préférence d'au moins 40% et mieux d'au moins 80%, par rapport au même article non revêtu du revêtement anti-reflets.

Typiquement, l'article d'optique revêtu du revêtement anti-reflets selon l'invention présente un Tv, facteur relatif de transmission dans le visible d'au plus 40%, mieux d'au plus 30% et mieux encore de moins de 20%, et de façon optimale de l'ordre de 15%.

Ces couches absorbantes peuvent comprendre un ou plusieurs oxydes de titane sous-stoechiométriques TiOx où x est inférieur à 2, de préférence varie de 0,2 à 1,2.

Les couches absorbant dans le visible peuvent être obtenues par évaporation d'un mélange de TiO et de $Ti_2O_3$. De préférence, la proportion massique de TiO dans le mélange de TiO et de $Ti_2O_3$ est d'au moins 50 %, de préférence d'au moins 60 %, et mieux encore d'au moins 70 %.

De préférence, les couches absorbant dans le visible de l'invention sont entièrement constituées d'oxydes sous-stoechiométriques TiOx. Néanmoins, elles peuvent comprendre des oxydes non absorbant dans le visible tel que $TiO_2$ en proportions telles que ces oxydes n'affectent pas les caractéristiques d'absorption de la lumière visible, c'est-à-dire qu'on obtienne une diminution du facteur de transmission Tv d'au moins 10%.

Dans la suite de la description et dans les revendications, on désigne par « oxyde de titane sous-stoechiométrique » aussi bien les oxydes de titane TiOx (x < 2) et leurs mélanges que les mélanges TiO / $Ti_2O_3$.

En général, ces couches absorbantes ont une épaisseur de 20 à 60 nm, préférentiellement de 30 à 50 nm.

De préférence, les couches absorbantes ont un coefficient d'extinction (k) de 0,2 à 2,4 pour toute longueur d'onde dans le domaine visible.

Généralement, les couches (HI) ont une épaisseur physique variant de 10 à 120 nm, et les couches (BI) ont une épaisseur physique variant de 10 à 100 nm.

Pour comparaison, une couche à base de $TiO_2$ présente un coefficient d'extinction proche de zéro pour toute longueur d'onde dans le domaine visible.

Les couches absorbantes ont un indice de réfraction n à température ambiante qui peut varier de 1,3 à 3,5, de préférence de 1,4 à 2,8 dans la gamme de longueurs d'ondes de 380 à 780 nm.

De préférence, encore, les couches absorbantes en oxyde de titane sous-stoechiométrique de l'invention ne comportent pas d'azote.

De manière générale le revêtement anti-reflets de l'article d'optique selon l'invention peut être déposé sur tout substrat transparent en verre organique ou minéral, et de préférence sur des substrats en verre organique.

Parmi les matières plastiques convenant pour les substrats, on peut citer les homo et copolymères de carbonate, (méth)acryliques, thio(méth)acryliques, de diéthylène glycol bisallylcarbonate tel que le matériau CR 39® commercialisé par PPG, d'uréthane, de thiouréthane, d'époxyde, d'épisulfure, et leurs combinaisons.

Les matériaux préférés pour les substrats sont les polyuréthanes (PU), les polythiouréthanes, les polymères (méth)acryliques et thio(méth)acryliques, et de préférence les polycarbonates (PC).

Par polycarbonate (PC), on entend au sens de la présente invention aussi bien les homopolycarbonates que les copolycarbonates et les copolycarbonates séquencés. Les polycarbonates sont disponibles dans le commerce, par exemple auprès des sociétés GENERAL ELECTRIC COMPANY sous la marque LEXAN®, TEIJIN sous la marque PANLITE®, BAYER sous la marque BAYBLEND®, MOBAY CHEMICHAL CORP. sous la marque MAKROLON® et DOW CHEMICAL Co. sous la marque CALIBRE®.

Selon la présente invention, le revêtement anti-reflets formé sur l'une au moins des faces du substrat comprend un empilement de couches alternées de haut indice (HI) et de bas indice (BI), dans lequel :

- l'une au moins des couches de haut indice de réfraction (HI) est constituée d'une couche absorbant dans le visible comprenant un oxyde de titane sous-stoechiométrique, et
- l'une au moins des couches de bas indice de réfraction (BI) comprend un mélange d'oxyde de silicium ($SiO_2$) et d'oxyde d'aluminium ($Al_2O_3$).

L'une au moins des couches absorbantes à base d'oxyde de titane sous-stoechiométrique est une couche de haut indice de réfraction (HI), tandis que l'autre couche à base de $SiO_2$ et d'$Al_2O_3$ est une couche de bas indice (BI). La couche BI ($SiO_2$/$Al_2O_3$) comprend préférentiellement de 1 à 5% en poids d'$Al_2O_3$ par rapport au poids total de $SiO_2$/$Al_2O_3$.

Pour un dépôt en phase vapeur de la couche BI, de préférence, dans le matériau source comprenant le mélange d'oxyde de silicium et d'oxyde d'aluminium, l'oxyde d'aluminium représente de 1 à 10% en poids, de préférence de 1 à 2% en poids du matériau source évaporable.

La couche de bas indice de réfraction (BI) à base d'un mélange d'oxyde de silicium et d'oxyde d'aluminium présente essentiellement deux effets. D'une part, elle permet d'améliorer l'homogénéité de la coloration sur l'ensemble de la surface optique de l'article optique, et, d'autre part, elle permet d'améliorer la durée de vie du revêtement anti-reflets, et sa résistance aux dégradations extérieures, en particulier aux UV.

Outre les couches à base d'oxyde de titane sous-stoechiométrique et la couche comprenant un mélange d'oxyde de silicium et d'oxyde d'aluminium, l'empilement anti-reflets tel que défini ci-dessus, peut également comprendre des couches (HI) et (BI) supplémentaires.

Ces couches (HI) supplémentaires peuvent être analogues à la couche (HI) à base d'oxyde de titane absorbant dans le visible, mais peuvent également être des couches (HI) classiques bien connues dans la technique.

De même, les couches (BI) supplémentaires peuvent être analogues à la couche (BI) comprenant un mélange d'oxyde de silicium et d'oxyde d'aluminium. Mais ce peut être également des couches (BI) classiques, comme par exemple des couches de $SiO_2$.

Dans un tel mode de réalisation, de préférence, la couche de bas indice de réfraction (BI) comprenant un mélange d'oxyde silicium et d'oxyde d'aluminium est adjacente à une couche absorbant dans le visible en oxyde de titane sous-stoechiométrique.

De manière particulièrement avantageuse, la couche BI comprenant un mélange $SiO_2/Al_2O_3$ est adjacente à deux couches HI absorbant dans le visible en oxyde de titane sous-stoechiométrique.

De préférence, l'empilement anti-reflets comprend au moins quatre couches alternées HI/BI, et mieux 6 couches ou plus.

D'une manière générale, les indices de réfraction $n_D^{25}$ auxquels il est fait référence dans la présente invention sont les indices de réfraction à 550 nm de longueur d'onde et à 25°C.

Selon la présente invention, l'empilement anti-reflets peut être appliqué sur la face avant et/ou la face arrière du substrat, mais il est de préférence appliqué exclusivement sur la face arrière. Lorsque le revêtement antireflets absorbant dans le visible est déposé en face arrière de l'article optique, l'aspect colorimétrique du verre ou de la face avant est quasiment identique à celui d'un verre non traité.

L'empilement antireflets selon l'invention est particulièrement adapté à des articles d'optique présentant une forte courbure concave, préférentiellement présentant un rayon de courbure de 90 mm ou moins et mieux de l'ordre de 70 mm.

Les substrats de l'article d'optique selon l'invention peuvent éventuellement être revêtus par des films anti-abrasion, antichoc, anti-rayures, ou autres revêtements classiquement utilisés.

Bien évidemment, l'article d'optique selon l'invention peut également comporter des revêtements formés sur le revêtement anti-reflets et capables de modifier leurs propriétés de surface, tels que des revêtements antisalissures, hydrophobes. Il s'agit généralement de matériaux de type fluorosilane, de quelques nanomètres d'épaisseur.

L'invention concerne également un procédé de fabrication d'un article comprenant un empilement anti -reflets comportant au moins deux couches absorbant dans le visible en oxyde de titane sous-stoechiométrique dans lequel l'ensemble des couches du revêtement anti-reflets sont déposées par évaporation sous vide selon la revendication 17.

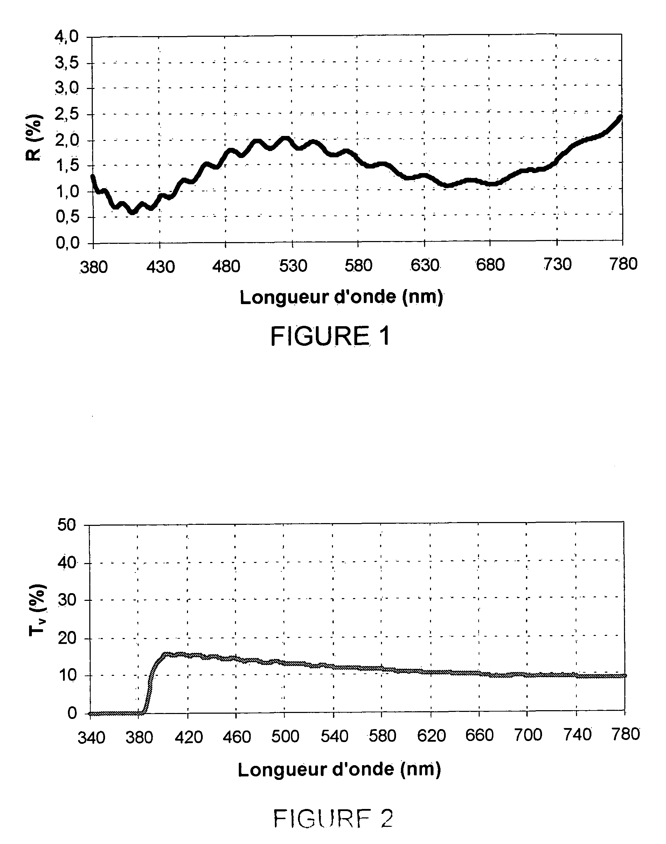

Les figures 1 et 2 sont des graphiques respectivement du facteur de réflexion (ou réflectance) (R) en fonction de la longueur d'onde et du facteur de transmission (T) en fonction de la longueur d'onde d'un article d'optique coloré selon l'invention.

Les exemples suivants illustrent l'invention de façon plus détaillée mais non limitative.

Le graphe du facteur de transmission T en fonction de la longueur d'onde a été mesurée à l'aide d'un spectrophotomètre DU 70 de la société Beckmann.

Le facteur relatif de transmission dans le visible Tv est calculé entre 380 et 780 nm en tenant compte :

- de l'illuminant C (CIE 1931)
- de l'observateur 2°.

Le spectre de réflexion R = f($\lambda$) a été mesuré avec un spectrophotomètre de la société Zeiss.

Les coefficients colorimétriques ont été calculées entre 380 et 780 nm en tenant compte :

- de l'illuminant D 65 (CIE 1976)
- de l'observateur 10°
  h est l'angle de teinte
  C est la chroma.

Les valeurs de n et k pour les couches TiOx ont été déterminées de la façon suivante :

L'indice de réfraction n et le coefficient d'extinction en fonction de la longueur d'onde ont été déterminées pour une couche TiOx « encapsulée », c'est-à-dire sur laquelle on a déposé une couche de $SiO_2/Al_2O_3$, l'ensemble étant déposé sur un disque de silicium.

Pour cela, une couche de $SiO_2/Al_2O_3$ seule a été analysée dans un premier temps par ellipsométrie selon une méthode bien connue de l'homme de l'art.

L'épaisseur de la couche de TiOx a été déterminée par profilométrie mécanique.

Les spectres ellipsométriques de la couche encapsulée ont été mesurés pour 5 angles d'incidence, allant de 55 à 75°, et inversée simultanément, en fixant l'épaisseur de la couche TiOx à celle déterminée par profilométrie et en utilisant les caractéristiques de la couche $SiO_2/Al_2O_3$ comme déterminées auparavant.

Coefficient d'extinction

Lorsqu'une lumière monochromatique d'intensité $I_o$ traverse un milieu homogène, l'intensité de la lumière émergente I décroit exponentiellement lorsque l'épaisseur I du milieu absorbant augmente :

$$I = I_o\, e^{-al} \text{ (Loi de Bouguer-Lambert)}$$

a est une constante appelée coefficient d'absorption (ou coefficient d'atténuation), caractéristique du milieu et de la longueur d'onde considérés.

Le coefficient d'absorption est lié au coefficient d'extinction k (qui est également la partie imaginaire de l'indice de réfraction complexe N = n + ik) par la relation suivante : $a = 4\pi\, nk/\lambda$.

Facteur de réflexion :

$$R = \Phi_R/\Phi$$

Il caractérise la réflexion à l'interface de deux milieux par le rapport du flux lumineux réfléchi $\Phi_R$ et du flux lumineux incident $\Phi$. En général, on détermine le facteur spectral de réflexion $R_\lambda$ pour chaque longueur d'onde $\lambda$ de la lumière incidente.

Facteur relatif de réflexion dans le visible $R_V$ :

Ce facteur est utilisé en optique ophtalmique, pour caractériser l'effet visuel de la réflexion par le rapport du flux de lumière $\Phi_R$ réfléchi et du flux de lumière incidente $\Phi$ tels qu'ils sont perçus par l'oeil, c'est-à-dire pondérés pour chaque longueur d'onde, par l'efficacité lumineuse relative spectrale $V_\lambda$ de l'oeil. Ce facteur se calcule selon la formule suivante:

$$R_V = \frac{\int_{380}^{780} R_\lambda \Phi_\lambda v_\lambda d\lambda}{\int_{380}^{780} \Phi_\lambda v_\lambda d\lambda}$$

avec $R_\lambda$ = facteur spectral de réflexion, $\Phi_\lambda$ = flux spectral incident, $V_\lambda$ = efficacité lumineuse relative photopique spectrale de l'oeil.

Facteur de transmission :

$$T - \Phi_V / \Phi$$

Il caractérise les propriétés de transmission d'un verre par le rapport du flux lumineux $\Phi_v$ émergeant de sa surface de sortie et du flux lumineux $\Phi$ incident sur sa surface d'entrée. En général, le facteur spectral de transmission $T_\lambda$ du verre est déterminé pour chaque longueur d'onde $\lambda$ de la lumière incidente.

Courbe de transmission :

Elle décrit les propriétés physiques du filtre de lumière qu'est le verre en présentant la variation de son facteur spectral de transmission $T_\lambda$ en fonction de la longueur d'onde. Cette courbe permet d'observer la sélectivité spectrale du filtre et de déterminer le facteur de transmission physique T du verre sur toute plage de longueurs d'onde $\lambda_1$ à $\lambda_2$ par la formule :

$$T = \frac{\int_{\lambda_1}^{\lambda_2} \Phi_\lambda T_\lambda d\lambda}{\int_{\lambda_1}^{\lambda_2} \Phi_\lambda d\lambda}$$

avec $\Phi_\lambda$ = flux spectral incident.

Facteur relatif de transmission dans le visible $T_v$:

Ce facteur est spécifique de l'optique ophtalmique: il résume les propriétés physiologiques du filtre en un nombre unique: le rapport du flux de lumière émergeant du verre et du flux de lumière incident sur le verre tels qu'ils sont perçus par l'oeil, c'est-à-dire pondérés pour chaque longueur d'onde, par l'efficacité lumineuse relative spectrale $V_\lambda$ de l'oeil. Ce facteur se calcule selon la formule suivante:

$$T_v = \frac{\int_{380}^{780} \Phi_\lambda T_\lambda V_\lambda d\lambda}{\int_{380}^{780} \Phi_\lambda V_\lambda d\lambda}$$

avec $T_\lambda$ = facteur spectral de transmission, $\Phi_\lambda$ = flux spectral incident, $V_\lambda$ = efficacité lumineuse relative photopique spectrale de l'oeil. C'est ce coefficient $T_v$ qui est utilisé pour la description et la classification des verres solaires.

EXEMPLE 1

On a formé par évaporation sous vide, sur la face arrière d'un substrat en polycarbonate pourvue d'un primaire antichoc et d'un revêtement antiabrasion, une couche anti-rayures à base de $SiO_2$, puis un revêtement anti-reflets selon l'invention comprenant six (6) couches et enfin un revêtement final hydrophobe (top coat).
La structure détaillée de l'empilement est indiquée dans le Tableau 1 :

TABLEAU 1

| Ordre d'évaporation | Epaisseur de la couche déposée | Forme et nature du matériau de départ |
|---|---|---|
| 1 | 100-110 nm | Granulés $SiO_2$ |
| 2 | 25-35 nm | Mélange d'oxydes de Ti sous-stoechiométrique |
| 3 | 10-20 nm | $SiO_2$ dopée $Al_2O_3$ (BI) (LIMA de UMICORE) |
| 4 | 45-55 nm | Mélange d'oxydes de Ti sous-stoechiométrique (HI) (TiO 70%, $Ti_2O_3$ 30% en poids) |
| 5 | 40-50 nm | $SiO_2$ dopée $Al_2O_3$ (BI) (LIMA de UMICORE) |
| 6 | 35-45 nm | Mélange d'oxydes de Ti sous-stoechiométrique (HI) |
| 7 | 70-80 nm | $SiO_2$ dopée $Al_2O_3$ (BI) |

(suite)

| Ordre d'évaporation | Epaisseur de la couche déposée | Forme et nature du matériau de départ |
|---|---|---|
| 8 | 1-5 nm | Top Coat |

Caractéristique du substrat en PC :

Verre afocal en polycarbonate de bisphénol A.

Primaire anti-choc

Latex de polyuréthane W234 de Baxenden. Epaisseur : 1 $\mu$m.

Revêtement anti-abrasion

Hydrolysat d'époxysilane ($\gamma$-glycidoxypropyltriméthoxysilane). Epaisseur : 3 $\mu$m.

Le substrat ci-dessus est alors traité comme indiqué ci-après, sans ajout d'$O_2$ dans l'enceinte.

Les dépôts sont effectués dans une machine BALZERS BAK 760. Tout d'abord, on impose un vide de $3\times10^{-5}$ mbars. Le substrat est soumis à une préparation de surface qui consiste en un pré-nettoyage ionique par bombardement par des ions Argon à l'aide d'un canon à ions Commonwealth Mark II.

On dépose ensuite sur la surface pré-nettoyée une couche de $SiO_2$ (couche n°1) anti-rayures en évaporant un matériau source de silice par un canon à électrons (à 1 nm/s sous $5\times10^{-5}$ mbars).

On procède alors au dépôt des 5 premières couches de l'empilement anti-reflets de l'invention mentionnées dans le tableau 1 :

| | Matériau | Vitesse de dépôt | Pression (air) |
|---|---|---|---|
| Couche n°2 | TiOx | 1,5 à 2 nm/s | $5\times10^{-6}$ mbars |
| Couche n°3 | $SiO_2/Al_2O_3$ | 1 nm/s | $10^{-5}$ mbars |
| Couche n°4 | TiOx | 1,5 à 2 nm/s | $5\times10^{-6}$ mbars |
| Couche n°5 | $SiO_2/Al_2O_3$ | 1 nm/s | $10^{-5}$ mbars |
| Couche n°6 | TiOx | 1,5 à 2 nm/s | $5\times10^{-6}$ mbars |

On soumet le substrat obtenu revêtu des cinq premières couches du revêtement anti-reflets à un traitement de bombardement électronique.

On dépose alors la sixième couche de l'empilement anti-reflets ($SiO_2/Al_2O_3$) dans les conditions 1 nm/s sous une pression de $10^{-5}$ mbars.

Enfin, on dépose la couche finale hydrophobe par évaporation sous effet joule d'un matériau OF110 de la société OPTRON.

Les caractéristiques optiques du substrat en PC ainsi revêtu sont indiquées ci-après.

**a) Caractéristiques de réflexion**

La courbe de réflectance spectrale (à 15° d'incidence) de l'article obtenu est représentée sur la figure 1.

Les valeurs du facteur de réflexion dans le domaine du visible (380-780 nm) permettent de calculer la performance (Rm, Rv) du traitement antireflet et de quantifier la couleur du reflet résiduel dans le système colorimétrique CIE L*a*b*. Le tableau 2 présente ces caractéristiques.

TABLEAU 2

| Rm(%) | Rv(%) | Chroma : C* | Angle de teinte : h(°) | a* | b* |
|---|---|---|---|---|---|
| 1,0 | 1,0 | 10 | 135 | -7,0 | 7,0 |

**b) Caractéristique de transmission**

La figure 2 représente le facteur relatif de transmission dans le visible Tv en fonction de la longueur d'onde. On voit qu'avec le revêtement anti-reflets selon l'invention, on peut atteindre un facteur de transmission de l'ordre de 15%.

Le tableau 3 ci-dessous qualifie la couleur en transmission dans le système CIE L*a*b*.

TABLEAU 3

| Tv% | Chroma : C* | Angle de teinte : b(°) | a* | b* |
|-----|-------------|------------------------|------|------|
| 15 | 7,0 | 270 | -0,5 | -7,0 |

Après deux mois de vieillissement naturel (gardé dans une pochette papier), il n'y a pas de modifications significatives des propriétés d'absorption de l'anti-reflets.

EXEMPLE 2

Le même dépôt est effectué sur des verre afocaux ORMA® d'ESSILOR (matériau obtenu par polymérisation de diallylcarbonate de diéthylène glycol) revêtu d'un primaire et d'un revêtement anti-abrasion identiques à ceux de l'exemple 1.

Les résultats au vieillissement naturel sont identiques à ceux de l'exemple 1.

**Revendications**

1. Article d'optique comprenant un substrat transparent en verre organique ou minéral, ayant des faces principales avant et arrière, l'une au moins desdites faces principales comportant un revêtement anti-reflets multicouches, ledit revêtement anti-reflets comprenant au moins deux couches absorbant dans le visible et comprenant un oxyde de titane sous-stoechiométrique, les couches absorbant dans le visible étant telles que le facteur relatif de transmission de la lumière visible Tv est réduit d'au moins 10 %, de préférence d'au moins 40 %, et mieux encore d'au moins 80 %, par rapport au même article ne comportant pas lesdites couches absorbant dans le visible, ledit revêtement anti-reflets comprenant un empilement de couches alternées de haut indice (HI) de réfraction et de bas indice de réfraction (BI) dans lequel l'une au moins des couches absorbant dans le visible est une couche haut indice (HI) comprenant un oxyde de titane sous-stoechiométrique, **caractérisé en ce que** l'une au moins des couches de bas indice (BI) comprend un mélange d'oxyde de silicium et d'oxyde d'aluminium.

2. Article selon la revendication 1, **caractérisé en ce que** les couches absorbant dans le visible ont un coefficient d'extinction (k) égal ou supérieur à 0,2, et de préférence variant de 0,2 à 2,4, pour toute longueur d'onde dans le domaine du visible allant de 380 à 780 nm.

3. Article selon la revendication 1 ou 2, **caractérisé en ce que** le substrat est en verre organique.

4. Article selon la revendication 3, **caractérisé en ce que** le substrat en verre organique est en polycarbonate.

5. Article selon l'une quelconque des revendications précédentes, **caractérisé en ce que** la couche de bas indice de réfraction (BI) comprenant un mélange d'oxyde de silicium et d'oxyde d'aluminium est adjacente à la couche de haut indice de réfraction (HI) absorbant dans le visible.

6. Article selon l'une quelconque des revendications précédentes, **caractérisé en ce que** chacune des couches de haut indice de réfraction (HI) du revêtement anti-reflets est une couche absorbant dans le visible formée d'oxyde de titane sous-stoechiométrique.

7. Article selon l'une quelconque des revendications précédentes, **caractérisé en ce que** chacune des couches de bas indice de réfraction (BI) du revêtement anti-reflets comprend un mélange d'oxyde de silicium et d'oxyde d'aluminium.

8. Article selon l'une quelconque des revendications précédentes, **caractérisé en ce que** l'oxyde de titane sous-stoechiométrique des couches absorbantes répond à la formule TiOx, dans laquelle x est inférieur à 2.

9.  Article selon la revendication 8, **caractérisé en ce que** x varie de 0,2 à 1,2.

10. Article selon l'une quelconque des revendications 1 à 9, **caractérisé en ce que** l'oxyde de titane sous-stoechiométrique est obtenu à partir d'un mélange de TiO et de $Ti_2O_3$.

11. Article selon la revendication 10, **caractérisé en ce que** la proportion massique de TiO dans le mélange de TiO et de $Ti_2O_3$ est d'au moins 50 %, de préférence d'au moins 60 %, et mieux d'au moins 70 %.

12. Article selon l'une quelconque des revendications précédentes, **caractérisé en ce que**, dans la couche de bas indice de réfraction (BI) $SiO_2/Al_2O_3$, $Al_2O_3$ représente 1 à 5% en poids.

13. Article selon l'une quelconque des revendications précédentes, **caractérisé en ce que** l'empilement anti-reflets comprend aux moins quatre couches alternées HI/BI, et de préférence 6 couches.

14. Article selon l'une quelconque des revendications précédentes, **caractérisé en ce qu'**il comprend un revêtement anti-rayures formé sur le substrat, le revêtement anti-reflets étant déposé sur ledit revêtement anti-rayures.

15. Article selon l'une quelconque des revendications précédentes, **caractérisé en ce que** le revêtement anti-reflets est déposé exclusivement sur la face arrière du substrat.

16. Article selon l'une quelconque des revendications précédentes, **caractérisé en ce que** l'article est un verre ophtalmique, en particulier un verre de lunette solaire, préférentiellement à forte courbure concave, pour des rayons de courbure de la face concave de 90 mm ou moins, préférentiellement de l'ordre de 70 mm.

17. Procédé de fabrication d'un article d'optique tel que défini selon l'une quelconque des revendications 1 à 16, **caractérisé en ce que** l'ensemble des couches de l'empilement anti-reflets est déposé par évaporation sous vide.

18. Article d'optique selon la revendication 1, **caractérisé en ce que** le facteur relatif de transmission de la lumière visible Tv dudit article est d'au plus 40%, de préférence d'au plus 30%, mieux au plus 20% et mieux encore de l'ordre de 15%.

19. Article d'optique selon la revendication 13, **caractérisé en ce que** l'empilement anti-reflets comprend les couches suivantes :

    25-35 nm d'un mélange d'oxydes de titane sous-stoechiométriques ;
    10-20 nm de $SiO_2$ dopée $Al_2O_3$ ;
    45-55 nm d'un mélange d'oxydes de titane sous-stoechiométriques ;
    40-50 nm de $SiO_2$ dopée $Al_2O_3$ ;
    35-45 nm d'un mélange d'oxydes de titane sous-stoechiométriques ;
    70-80 nm de $SiO_2$ dopée $Al_2O_3$.

**Claims**

1.  An optical article comprising a transparent substrate made of organic or mineral glass, having main front and rear faces, at least one of said main faces comprising a multi-layer anti-reflection coating, said anti-reflection coating comprising at least two layers absorbing in the visible range and comprising a sub-stoichiometric titanium oxide, the layers absorbing in the visible range being such that the relative transmission factor of visible light Tv is reduced by at least 10%, preferably by at least 40%, and still more preferably by at least 80%, compared with the same article not comprising said layers absorbing in the visible range, said anti-reflection coating comprising a stack of alternating high refractive index (HI) and low refractive index (LI) layers, wherein:

    - at least one of the layers absorbing in the visible range is a high index (HI) layer comprising a sub-stoichiometric titanium oxide,
    - at least one of the low index (LI) layers comprises a mixture of silicon oxide and aluminium oxide.

2.  An article according to claim 1, wherein the layers absorbing in the visible range have an extinction coefficient (k) equal to or greater than 0.2, and preferably varying from 0.2 to 2.4, for all wavelengths in the visible range from 380 to 780 nm.

3. An article according to claim 1 or 2, wherein the substrate is made of organic glass.

4. An article according to claim 3, wherein the organic glass substrate is made of polycarbonate.

5. An optical article according to any one of the preceding claims, wherein the low refractive index layer (LI) comprising a mixture of silicon oxide and aluminium oxide is adjacent to the high refractive index (HI) layers absorbing in the visible range.

6. An article according to any one of the preceding claims, wherein each of the high refractive index layers (HI) of the anti-reflection coating is a layers absorbing in the visible range made of sub-stoichiometric titanium oxide.

7. An optical article according to any one of the preceding claims, wherein each of the low refractive index layers (LI) of the anti-reflection coating comprises a mixture of silicon oxide and aluminium oxide.

8. An article according to any one of the preceding claims, wherein the sub-stoichiometric titanium oxide in the absorbing layers is given by the formula TiOx, wherein x is less than 2.

9. An article according to claim 8, wherein x varies from 0.2 to 1.2.

10. An article according to any one of claims 1 to 9, wherein the sub-stoichiometric titanium oxide is obtained from a mixture of TiO and $Ti_2O_3$.

11. An article according to claim 10, wherein the weight ratio of TiO in the mixture of TiO and $Ti_2O_3$ is at least 50%, preferably at least 60% and more preferably at least 70%.

12. An article according to any one of the preceding claims, wherein the $SiO_2/Al_2O_3$ low refractive index layer (LI) contains 1 to 5% by weight of $Al_2O_3$.

13. An article according to any one of the preceding claims, wherein the anti-reflection stack comprises at least four alternating HI/LI layers, and preferably 6 layers.

14. An article according to any one of the preceding claims, wherein it comprises an anti-scratch coating formed on the substrate, the anti-reflection coating being deposited onto said anti-scratch coating.

15. An article according to any one of the preceding claims, wherein the anti-reflection coating is deposited exclusively on the rear face of the substrate.

16. An article according to any one of the preceding claims, wherein the article is an ophthalmic glass, in particular a sunglass lens, preferably with a high concave curvature, for curvature radii of the concave face of 90 mm or less, preferably of the order of 70 mm.

17. A manufacturing process of an optical article according to any one of claims I to 16, wherein all the layers of the anti-reflection stack are deposited by vacuum evaporation.

18. An optical article according to claim 1, wherein the relative transmission factor of visible light Tv of said article is at most 40%, preferably at most 30%, more preferably at most 20% and most preferably of the order of 15%.

19. An optical article according to claim 13, wherein the anti-reflection stack comprises the following layers:

25-35 nm of a mixture of sub-stoichiometric titanium oxides;
10-20 nm of $SiO_2$ doped with $Al_2O_3$;
45-55 nm of a mixture of sub-stoichiometric titanium oxides;
40-50 nm $SiO_2$ doped with $Al_2O_3$;
35-45 nm of a mixture of sub-stoichiometric titanium oxides;
70-80 nm $SiO_2$ doped with $Al_2O_3$.

**Patentansprüche**

1. Optischer Gegenstand, umfassend ein transparentes Substrat aus organischem oder Mineralglas mit vorderen und hinteren Hauptseiten, wobei mindestens eine dieser Hauptseiten eine mehrlagige Antireflexbeschichtung umfasst, **dadurch gekennzeichnet, dass** diese Antireflexbeschichtung mindestens zwei im sichtbaren Wellenlängenbereich absorbierende Schichten umfasst und ein unterstöchiometrisches Titanoxid umfasst, wobei die im sichtbaren Bereich absorbierenden Schichten dergestalt sind, dass der relative Transmissionsfaktor des sichtbaren Lichts $T_v$ um mindestens 10 %, vorzugsweise um mindestens 40 % und mehr bevorzugt um mindestens 80 % vermindert ist, bezogen auf den gleichen Gegenstand, der diese im sichtbaren Bereich absorbierenden Schichten nicht enthält, wobei die Antireflexbeschichtung einen Stapel aus abwechselnden Schichten mit hohem Brechungsindex (HI) und niedrigem Brechungsindex (BI) umfasst, in dem mindestens eine der im sichtbaren Bereich absorbierenden Schichten eine Hochindexschicht (HI) ist, die ein unterstöchiometrisches Titanoxid umfasst, und mindestens eine der Niederindexschichten (BI) eine Mischung aus Siliciumoxid und Aluminiumoxid umfasst.

2. Gegenstand nach Anspruch 1, **dadurch gekennzeichnet, dass** die im sichtbaren Bereich absorbierenden Schichten für jede Wellenlänge im sichtbaren Bereich zwischen 380 und 780 nm einen Extinktionskoeffizienten (k) gleich oder größer als 0,2, und vorzugsweise zwischen 0,2 und 2,4 aufweisen.

3. Gegenstand nach Anspruch 1 oder 2, **dadurch gekennzeichnet, dass** das Substrat ein organisches Glas ist.

4. Gegenstand nach Anspruch 3, **dadurch gekennzeichnet, dass** das Substrat aus organischem Glas aus Polycarbonat ist.

5. Gegenstand nach einem der vorhergehenden Ansprüche, **dadurch gekennzeichnet, dass** die Schicht mit niedrigem Brechungsindex (BI), die eine Mischung aus Siliciumoxid und Aluminiumoxid umfasst, der Schicht mit hohem Brechungsindex (HI), die im sichtbaren Bereich absorbiert, benachbart ist.

6. Gegenstand nach einem der vorhergehenden Ansprüche, **dadurch gekennzeichnet, dass** jede der Schichten mit hohem Brechungsindex (HI) der Antireflexbeschichtung eine im sichtbaren Bereich absorbierende Schicht ist, die aus einem unterstöchiometrischen Titanoxid gebildet wird.

7. Gegenstand nach einem der vorhergehenden Ansprüche, **dadurch gekennzeichnet, dass** jede der Schichten mit niedrigem Brechungsindex (BI) der Antireflexbeschichtung eine Mischung aus Siliciumoxid und Aluminiumoxid umfasst.

8. Gegenstand nach einem der vorhergehenden Ansprüche, **dadurch gekennzeichnet, dass** das unterstöchiometrische Titanoxid der absorbierenden Schichten der Formel $TiO_x$ entspricht, in der x kleiner als 2 ist.

9. Gegenstand nach Anspruch 8, **dadurch gekennzeichnet, dass** x zwischen 0,2 und 1,2 variiert.

10. Gegenstand nach einem der Ansprüche 1 bis 9, **dadurch gekennzeichnet, dass** das unterstöchiometrische Titanoxid ausgehend von einer Mischung aus TiO und $Ti_2O_3$ erhalten wird.

11. Gegenstand nach Anspruch 10, **dadurch gekennzeichnet, dass** der Massenanteil von TiO in der Mischung aus TiO und $Ti_2O_3$ mindestens 50 %, vorzugsweise mindestens 60 %, und am meisten bevorzugt mindestens 70 % beträgt.

12. Gegenstand nach einem der vorhergehenden Ansprüche, **dadurch gekennzeichnet, dass** in der Schicht mit niedrigem Brechungsindex (BI) $SiO_2/Al_2O_3$, $Al_2O_3$ 1 bis 5 Gew.-% umfasst.

13. Gegenstand nach einem der vorhergehenden Ansprüche, **dadurch gekennzeichnet, dass** die Antireflexschichtung mindestens vier abwechselnde Schichten HI/BI umfasst, und vorzugsweise mindestens 6 Schichten.

14. Gegenstand nach einem der vorhergehenden Ansprüche, **dadurch gekennzeichnet, dass** er eine kratzfeste Beschichtung umfasst, die auf dem Substrat gebildet wird, wobei die Antireflexbeschichtung auf diese kratzfeste Beschichtung aufgebracht wird.

15. Gegenstand nach einem der vorhergehenden Ansprüche, **dadurch gekennzeichnet, dass** die Antireflexbeschichtung ausschließlich auf der Rückseite des Substrats aufgebracht wird.

16. Gegenstand nach einem der vorhergehenden Ansprüche, **dadurch gekennzeichnet, dass** der Gegenstand ein ophthalmisches Glas ist, insbesondere ein Glas für Sonnenbrillen, vorzugsweise mit starker konkaver Krümmung, für Krümmungsradien der konkaven Seite von 90 mm oder weniger, vorzugsweise von etwa 70 mm.

17. Verfahren zur Herstellung eines optischen Gegenstands wie nach einem der vorhergehenden Ansprüche 1 bis 16 definiert, **dadurch gekennzeichnet, dass** die gesamten Schichten der Antireflexschichtung mittels Verdampfen im Vakuum aufgebracht werden.

18. Optischer Gegenstand nach Anspruch 1, **dadurch gekennzeichnet, dass** der relative Transmissionsfaktor des sichtbaren Lichts $T_v$ dieses Gegenstands höchstens 40 %, vorzugsweise höchstens 30 %, mehr bevorzugt höchstens 20 % und am meisten bevorzugt etwa 15 % beträgt.

19. Optischer Gegenstand gemäß Anspruch 13, **dadurch gekennzeichnet, dass** die Antireflexschichtung die folgenden Schichten umfasst:

> 25 - 35 nm einer Mischung aus unterstöchiometrischen Titanoxiden;
> 10 - 20 nm mit $Al_2O_3$ dotiertes $SiO_2$;
> 45 - 55 nm einer Mischung aus unterstöchiometrischen Titanoxiden;
> 40 - 50 nm mit $Al_2O_3$ dotiertes $SiO_2$;
> 35 - 45 nm einer Mischung aus unterstöchiometrischen Titanoxiden;
> 70 - 80 nm mit $Al_2O_3$ dotiertes $SiO_2$.

FIGURE 1

FIGURF 2

**EP 1 697 770 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4802744 A
- US 4802755 A
- WO 9727997 A
- EP 0834092 B1